# EUROPEAN PATENT APPLICATION

(11) **EP 2 341 672 A1**
(43) Date of publication of application: **06.07.2011**
(21) Application number: 09823016.2
(22) Date of filing: 28.07.2009
(51) Int. Cl.: H04L 12/56

(54) **A PATH COMPUTATION AND ESTABLISHMENT METHOD, APPARATUS AND SYSTEM**

(30) Priority: 31.10.2008 CN 200810217174
(71) Applicant: Huawei Technologies Co., Ltd., Longgang District, Shenzhen Guangdong 518129 (CN)
(72) Inventor: ZI, Xiaobing, Shenzhen Guangdong 518129 (CN); SUN, Jun, Shenzhen Guangdong 518129 (CN)
(74) Representative: Thun, Clemens
(86) International application number: PCT/CN2009/072939
(87) International publication number: WO 2010/048824

(57) **Abstract**

In the field of network technology, a path computation method is provided, which includes: receiving Path Computation Request (PCReq) information from a Path Computation Client (PCC), in which address information of a head node and an end node of a path and information of add/drop interfaces of a service corresponding to the path are carried in the PCReq information; acquiring label information of the add/drop interfaces of the service corresponding to the path, and cross-connection capability limit information of the head node and the end node of the path; computing path information satisfying the cross-connection capability limit information of the head node and the end node of the path, according to the address information of the head node and the end node of the path, the information of the add/drop interfaces of the service, the label information of the add/drop interfaces of the service, and the cross-connection capability limit information of the head node and the end node of the path; and sending the computed path information to the PCC. A path establishment method, apparatus, and a system are provided.

## Description

### FIELD OF THE TECHNOLOGY

The present invention relates to the field of the network technology, and more particularly to a path computation and establishment method, apparatus, and system.

### BACKGROUND OF THE INVENTION

In order to improve service activation flexibility, a control plane is introduced into a conventional optical transport network, and the optical transport network with the introduced control plane is called an "Automatic Switch Optical Network (ASON)". The control plane provides an entire set of control protocols, including a signaling protocol, a routing protocol, and a link management protocol. Automatic remote configuration and consistency check may be performed on neighboring nodes through the link management protocol, and the links passing the check may be released to the entire network through the routing protocol. In this manner, each node may collect topology information of the entire network. When one path needs to be activated, a head node of the path computes path information according to the topology information of the entire network by adopting a certain algorithm, and establishes the path according to the computed path information by using the signaling protocol.

When the network has a large scale, as a processing capability of the node is limited, the computation is difficultly performed. Here, a Path Computation Element (PCE) is configured to dedicatedly compute the path. The PCE may be implemented on a server with a high performance or a node with an excellent performance. When one path needs to be activated, serving as a Path Computation Client (PCC), the head node of the path requests the PCE to compute the path by using a Path Computation Request (PCReq) message of a Path Computation Element Protocol (PCEP); the PCE computes the path information, and returns the path information to the PCC by using a Path Computation Respond (PCRep) message; and the PCC establishes the path according to the returned path information.

During a procedure of creating the present invention, inventors find that the prior art at least has the following problem that the path information computed by the PCE does not satisfy cross-connection capability limit information of the head node and an end node of the path, such that the PCC cannot successfully establish a path according to the information returned by the PCE, and the cross-connection capability limit problem of the nodes is common in the network.

### SUMMARY OF THE INVENTION

The present invention is directed to a path computation and establishment method, apparatus, and system, so as to acquire a path satisfying a cross-connection capability limit through computation. The present invention provides the following technical solutions.

A path computation method is provided, which includes the following steps.

PCReq information is received from a PCC, in which address information of a head node and an end node of a path and information of add/drop interfaces of a service corresponding to the path are carried in the PCReq information.

Label information of the add/drop interfaces of the service corresponding to the path, and cross-connection capability limit information of the head node and the end node of the path are acquired.

Path information satisfying the cross-connection capability limit information of the head node and the end node of the path is computed, according to the address information of the head node and the end node of the path, the information of the add/drop interfaces of the service, the label information of the add/drop interfaces of the service, and the cross-connection capability limit information of the head node and the end node of the path.

The computed path information is sent to the PCC.

A path establishment method is provided, which includes the following steps.

PCReq information is sent to a PCE, in which address information of a head node and an end node of a path and information of add/drop interfaces of a service corresponding to the path are carried in the PCReq information.

Path information computed by the PCE is received, in which the path information is computed by the PCE according to the address information of the head node and the end node of the path, the information of the add/drop interfaces of the service, the acquired label information of the add/drop interfaces of the service corresponding to the path, and the acquired cross-connection capability limit information of the head node and the end node of the path.

The path is established according to the path information.

A PCE is provided, which includes a receiving module, an acquisition module, a computation module, and a sending module.

The receiving module is configured to receive PCReq information from a PCC, in which address information of a head node and an end node of a path and information of add/drop interfaces of a service corresponding to the path are carried in the PCReq information.

The acquisition module is configured to acquire label information of the add/drop interfaces of the service corresponding to the path, and cross-connection capability limit information of the head node and the end node of the path.

The computation module is configured to compute path information satisfying the cross-connection capability limit information of the head node and the end node of the path, according to the address information of the head node and the end node of the path, the information of the add/drop interfaces of the service, the label information of the add/drop interfaces of the service, and the cross-connection capability limit information of the head node and the end node of the path.

The sending module is configured to send the computed path information to the PCC.

A PCC is provided, which includes a sending module, a receiving module, and a path establishment module.

The sending module is configured to send PCReq information to a PCE, in which address information of a head node and an end node of a path and information of add/drop interfaces of a service corresponding to the path are carried in the PCReq information.

The receiving module is configured to receive path information computed by the PCE, in which the path information is computed by the PCE according to the address information of the head node and the end node of the path, the information of the add/drop interfaces of the service, the acquired label information of the add/drop interfaces of the service corresponding to the path, and the acquired cross-connection capability limit information of the head node and the end node of the path.

The path establishment module is configured to establish a path according to the path information.

A path establishment system is provided, which includes a PCE and a PCC.

The PCE is configured to receive PCReq information from the PCC, in which address information of a head node and an end node of a path and information of add/drop interfaces of a service corresponding to the path are carried in the PCReq information; acquire label information of the add/drop interfaces of the service corresponding to the path, and cross-connection capability limit information of the head node and the end node of the path; compute path information satisfying the cross-connection capability limit information of the head node and the end node of the path, according to the address information of the head node and the end node of the path, the information of the add/drop interfaces of the service, the label information of the add/drop interfaces of the service, and the cross-connection capability limit information of the head node and the end node of the path; and send the computed path information to the PCC.

The PCC is configured to send the PCReq information to the PCE, and establish a path according to the path information returned by the PCE.

By adopting the technical solutions of the present invention, the PCE computes the path information satisfying the cross-connection capability limit information of the head node and the end node of the path, according to the address information of the head node and the end node of the path, the information of the add/drop interfaces of the service, the label information of the add/drop interfaces of the service, and the cross-connection capability limit information of the head node and the end node of the path, and the PCC establishes the path according to the path information returned by the PCE, thereby effectively improving a success ratio of computing and establishing the path.

### BRIEF DESCRIPTION OF THE DRAWINGS

The accompanying drawings are intended for better understanding of the present invention and constitute part of this application rather than limitation of the present invention.
FIG. 1 is a network topological view according to an embodiment of the present invention;
FIG. 2 is a flow chart of a path computation method according to an embodiment of the present invention;
FIG. 3 is an encapsulation format of a terminal path information object according to an embodiment of the present invention;
FIG. 4 is a flow chart of a path establishment method according to an embodiment of the present invention;
FIG. 5 is a schematic structural view of a PCE according to an embodiment of the present invention;
FIG. 6 is a schematic structural view of a PCC according to an embodiment of the present invention; and
FIG. 7 is a schematic view of a path establishment system according to an embodiment of the present invention.

### DETAILED DESCRIPTION OF THE EMBODIMENTS

To make the technical solutions of the present invention more comprehensible, the present invention is described in detail with reference to the accompanying drawings and embodiments as follows. The exemplary embodiments of the present invention and description thereof are intended for interpreting rather than limiting the present invention.

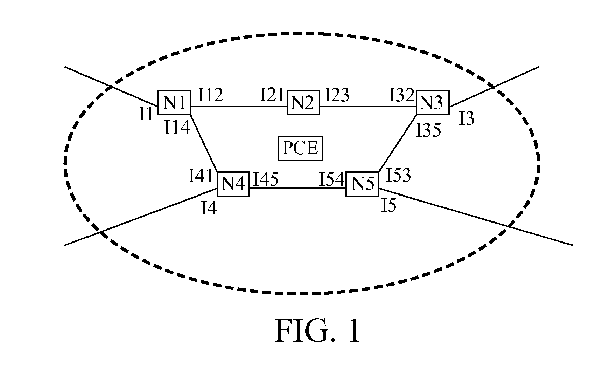

For ease of description, FIG. 1 is a network topological view according to an embodiment of the present invention, which includes five node being N1-N5 and one PCE, and each node has several interfaces. As shown in FIG. 1, each interface has a number, and a corresponding link exists between the interfaces. It is assumed that one path needs to be established between N1 and N3, in which the path is used for transmitting services between the two ends, the path may be a wavelength path or may also be an electrical layer path. Serving as a PCC, the head node N1 of the path requests a PCE in the network to compute the path, and the PCE computes the path and returns a PCRep to the PCC. If the path is successfully computed, the PCC acquires the available path information, so as to establish a path according to the path information. Definitely, the actual network may be more complicated, or even the computation of the multi-domain path is performed, but the principle is the same.

In order to make the present invention more comprehensible, the specific implementations of present invention is further described in detail below with reference to the accompanying drawings and embodiments.

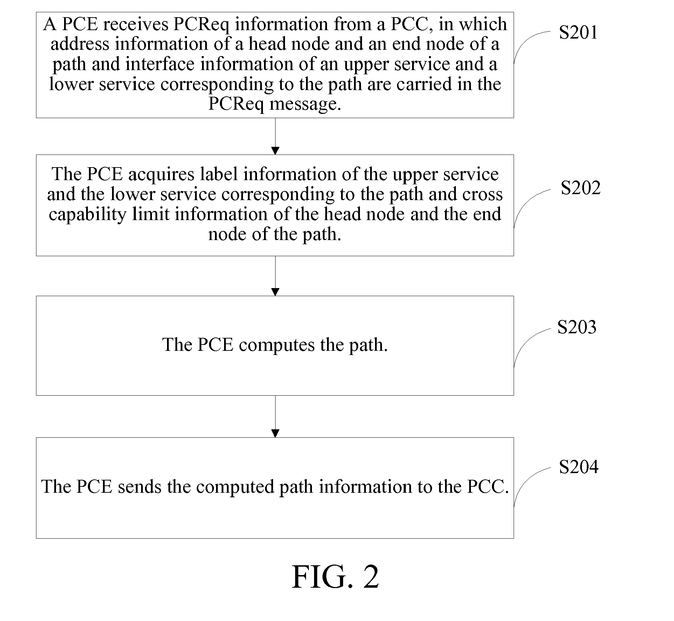

In a first embodiment, a path computation method is provided, which is capable of computing a unidirectional wavelength path. A process is as shown in FIG. 2, and in combination of FIG. 1, the method specifically includes the following steps.

In Step S201, a PCE receives PCReq information from a PCC, in which address information of a head node and an end node of a path and information of add/drop interfaces of a service corresponding to the path are carried in the PCReq message.

In this embodiment, the PCE receives the PCReq information of establishing the unidirectional wavelength path from a node N1 (PCC), the content carried in the PCReq information includes the address information of the head node and the end node of the path, the information of the add/drop interfaces of the service corresponding to the path, and label information of the add/drop interfaces of the service corresponding to the path, in which the head node is N1, an interface of the add/drop interfaces of the service of the head node N1 is I1, a label of the upper service of the head node N1 is wavelength 1, the end node is N3, an interface of the add/drop interfaces of the service of the end node N3 is 13, a label of the lower service of the end node N3 is wavelength 3. If the address information of the head node and the end node of the path may be acquired through the information of the add/drop interfaces of the service, the address information of the head node and the end node of the path may not be carried in the PCReq message.

In Step S202, the PCE acquires label information of the add/drop interfaces of the service corresponding to the path and cross-connection capability limit information of the head node and the end node of the path.

In this embodiment, the label information of the add/drop interfaces of the service in the PCReq information, being wavelength information used by the add/drop interfaces of the service, is acquired; and cross-connection capability limit information of wavelengths of the head node and the end node of the path (N1 and N3) stored on the PCE is acquired.

In Step S203, the PCE computes the path.

In this embodiment, the PCE firstly computes the path according to the address information of the head node and the end node of the path and other constraining conditions by adopting a route and wavelength alignment (RWA) algorithm, and it is assumed that two paths are acquired, namely, a path 1: I14 (wavelength 3)-I41 (wavelength 3)-145 (wavelength 3)-154 (wavelength 3)-153 (wavelength 3)-135 (wavelength 3), and a path 2: I12 (wavelength 2)-I21 (wavelength 2)-123 (wavelength 2)-132 (wavelength 2). The PCE excludes an unreachable path according to the information of the add/drop interfaces of the service (I1, I3), the label information of the add/drop interfaces of the service (wavelength 1, wavelength 3), and the cross-connection capability limit information of the head node and the end node of the path. It is assumed that in this embodiment, it is impossible to cross-connection from the I1 (wavelength 1) to the I12 (wavelength 2), such that the PCE excludes the path 2, it is assumed that it is possible to cross-connection from the I1 (wavelength 1) to the I14 (wavelength 3) and cross-connection from the 135 (wavelength 3) to the 13 (wavelength 3), the PCE acquires the path information satisfying the cross-connection capability limit information of the head node and the end node of the path: I1 (wavelength 1)-I14 (wavelength 3)-I41 (wavelength 3)-145 (wavelength 3)-154 (wavelength 3)-153 (wavelength 3)-135 (wavelength 3)-13 (wavelength 3). Various specific path computation methods exist, for example, a final result may be directly computed for one time according to all the conditions, here, other specific algorithms are not limited, as long as the path information satisfying the cross-connection capability limit is computed according to the address information of the head node and the end node of the path, the information of the add/drop interfaces of the service corresponding to the path, the label information of the add/drop interfaces of the service corresponding to the path, and the cross-connection capability limit information of the head node and the end node of the path (N1 and N3).

In Step S204, the PCE sends the computed path information to the PCC.

In this embodiment, the PCE sends the acquired path information to the node N1 (PCC).

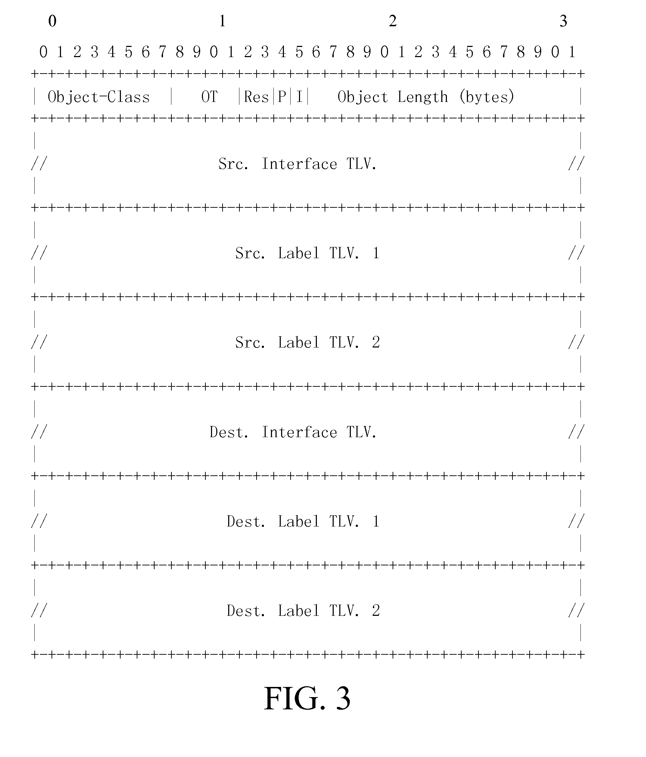

In this embodiment, the information of the add/drop interfaces of the service and the label information of the add/drop interfaces of the service are carried in the PCReq information, and the information cannot be carried in the prior art, such that a PCEP needs to be extended. A specific extension mode is proposed in the following, in which an terminal path information object is added to the PCEP, various information is carried by adopting a Type, Length, Value, (TLV) mode, and an encapsulation format is as shown in FIG. 3, in which definition of each field is given in the following.

Object-Class: object class.

OT: object type.

Res: reserved field.

P: processing rule field, when being set, it represents that the constraining condition described by the object needs to be processed.

I: ignoring field, when being set, it represents whether the constraining condition described by the object is ignored during computation.

Object Length: length of the entire object.

The object includes six TLVs, respectively representing the interface of the add/drop interfaces of the service of the head node, the label of the upper service of the head node, the label of the lower service of the head node, the interface of the add/drop interfaces of the service of the end node, the label of the upper service of the end node, and the label of the lower service of the end node. The specific definitions of the TLVs adopt relevant definitions of interfaces and label bodies in an Explicit Route Object (ERO) defined by the Internet Engineering Task Force (IETF).

During the specific application, the object needs to include two TLVs being "the interface of add/drop interfaces of the service of the head node" and the "interface of the add/drop interfaces of the service of the end node", when the label information of the add/drop interfaces of the service may be acquired from others, the object may not include other TLVs or set them as zero, which will be specifically described in a second embodiment. When the PCC requests to compute the unidirectional path, the object does not include the two TLVs being "label of the lower service of the head node" and the "label of the upper service of the end node" or sets them as zero, for example, the situation of this embodiment.

One extension mode of the PCEP is proposed, and other extension modes, in which the label information of the add/drop interfaces of the service is implemented through a sub-object form, also exist, as long as the required information may be carried in the PCReq information, and other extension modes of the PCEP are not described in the following embodiment.

By adopting this embodiment, the path satisfying the cross-connection capability limit of the wavelengths of the head node and the end node of the path is computed, thereby effectively improving a success ratio of computing the path.

In a second embodiment, a path computation method is provided, which is capable of computing a unidirectional wavelength path. A process is as shown in FIG. 2, and in combination of FIG. 1, the method specifically includes the following steps.

In Step S201, a PCE receives PCReq information from a PCC, in which address information of a head node and an end node of a path and information of add/drop interfaces of a service corresponding to the path are carried in the PCReq message.

In this embodiment, the PCE receives the PCReq information of establishing the unidirectional wavelength path from a node N1 (PCC), the content carried in the PCReq information includes the address information of the head node and the end node of the path and the information of the add/drop interfaces of the service corresponding to the path, in which the head node is N1, an interface of the add/drop interfaces of the service of the head node N1 is I1, the end node is N3, and an interface of the add/drop interfaces of the service of the end node N3 is I3.

In Step S202, the PCE acquires label information of the add/drop interfaces of the service corresponding to the path and cross-connection capability limit information of the head node and the end node of the path.

In this embodiment, the label information of the add/drop interfaces of the service stored on the PCE is acquired, and here the label information of the add/drop interfaces of the service is the available wavelength information of each interface pre-stored on the PCE. It is assumed that in this embodiment, available wavelengths of the upper service interface of the head node N1 are wavelength 1 and wavelength 5, and available wavelengths of the lower service interface of the end node N3 are wavelength 3 and wavelength 6, and the information is the available wavelength information of the interface of the add/drop interfaces of the service; and cross-connection capability limit information of wavelengths of the head node and the end node of the path (N1 and N3) stored on the PCE is acquired.

In Step S203, the PCE computes the path.

In this embodiment, the PCE firstly computes the path according to the address information of the head node and the end node of the path and other constraining conditions by adopting an RWA algorithm, and it is assumed that two paths are acquired, namely, a path 1: I14 (wavelength 3)-I41 (wavelength 3)-145 (wavelength 3)-154 (wavelength 3)-153 (wavelength 3)-135 (wavelength 3), and a path 2: I12 (wavelength 2)-I21 (wavelength 2)-123 (wavelength 2)-132 (wavelength 2). The PCE excludes an unreachable path according to the information of the add/drop interfaces of the service (I1, I3), the label information of the add/drop interfaces of the service (wavelength 1, wavelength 3), and the cross-connection capability limit information of the head node and the end node of the path. It is assumed that in this embodiment, it is impossible to cross-connection from the I1 (wavelength 1) to the I14 (wavelength 3) and cross-connection from the I1 (wavelength 5) to the I14 (wavelength 3), the PCE excludes the path 1, and it is assumed that it is possible to cross-connection from I1 (wavelength 1) to the I12 (wavelength 2) and cross-connection from the 132 (wavelength 2) to the 13 (wavelength 6), the PCE acquires the path information satisfying the cross-connection capability limit information of the head node and the end node of the path, that is, I1 (wavelength 1)-I12 (wavelength 2)-I21 (wavelength 2)-123 (wavelength 2)-132 (wavelength 2)-13 (wavelength 6).

In Step S204, the PCE sends the computed path information to the PCC.

In this embodiment, the PCE sends the acquired path information to the node N1 (PCC).

By adopting this embodiment, the path satisfying the cross-connection capability limit of the wavelengths of the head node and the end node of the path is computed, thereby effectively improving a success ratio of computing the path.

In a third embodiment, a path computation method is provided, which is capable of computing a bi-directional Gigabit Ethernet (GE) path. A process is as shown in FIG. 2, and in combination of FIG. 1, the method specifically includes the following steps.

In Step S201, a PCE receives PCReq information from a PCC, in which address information of a head node and an end node of a path and information of add/drop interfaces of a service corresponding to the path are carried in the PCReq message.

In this embodiment, the PCE receives the PCReq information of establishing the bi-directional GE path from a node N1 (PCC), the content carried in the PCReq information includes the address information of the head node and the end node of the path, the information of the add/drop interfaces of the service corresponding to the path, and label information of the add/drop interfaces of the service corresponding to the path. The head node is N1, an interface of the add/drop interfaces of the service of the head node N1 is I1, a label of the upper service of the head node N1 is time-slot 1, a label of the lower service of the head node N1 is time-slot 1, the end node is N3, an interface of the add/drop interfaces of the service of the end node N3 is 13, a label of the upper service of the end node N3 is time-slot 3, and a label of the lower service of the end node N3 is time-slot 3.

In Step S202, the PCE acquires label information of the add/drop interfaces of the service corresponding to the path and cross-connection capability limit information of the head node and the end node of the path.

In this embodiment, the label information of the add/drop interfaces of the service in the PCReq information, being time-slot information used by the add/drop interfaces of the service, is acquired; and cross-connection capability limit information of time-slots of the head node and the end node of the path (N1 and N3) stored on the PCE is acquired.

In Step S203, the PCE computes the path.

In this embodiment, the PCE firstly computes the path according to the address information of the head node and the end node of the path and other constraining conditions by adopting a Constrained Shortest Path First (CSPF) algorithm, and it is assumed that two paths are acquired, namely, a path 1: 114 (time-slot 3)-I41 (time-slot 3)-145 (time-slot 3)-154 (time-slot 3)-153 (time-slot 3)-135 (time-slot 3), and a path 2: I12 (time-slot 2)-I21 (time-slot 2)-123 (time-slot 2)-132 (time-slot 2). The PCE excludes an unreachable path according to the information of the add/drop interfaces of the service (I1, I3), the label information of the add/drop interfaces of the service (time-slot 1, time-slot 3), and the cross-connection capability limit information of the head node and the end node of the path. It is assumed that in this embodiment, it is impossible to cross-connection from the I1 (time-slot 1) to the I12 (time-slot 2), the PCE excludes the path 2, and it is assumed that it is possible to cross-connection from I1 (time-slot 1) to the I14 (time-slot 3), cross-connection from 135 (time-slot 3) to the 13 (time-slot 3), cross-connection from 13 (time-slot 3) to the 135 (time-slot 3), and cross-connection from the I14 (time-slot 3) to the I1 (time-slot 1), the PCE acquires the path information satisfying the cross-connection capability limit information of the head node and the end node of the path, that is, I1 (time-slot 1)-I14 (time-slot 3)-I41 (time-slot 3)-145 (time-slot 3)-154 (time-slot 3)-153 (time-slot 3)-135 (time-slot 3)-13 (time-slot 3).

In Step S204, the PCE sends the computed path information to the PCC.

In this embodiment, the PCE sends the acquired path information to the node N1 (PCC).

The GE path in this embodiment is an electrical layer path, and for persons of ordinary skill in the art, based on the same concept, other electrical layer paths satisfying the cross-connection capability limit of the time-slots of the head node and the end node of the path may be computed.

By adopting this embodiment, the path satisfying the cross-connection capability limit of the time-slots of the head node and the end node of the path is computed, thereby effectively improving a success ratio of computing the path.

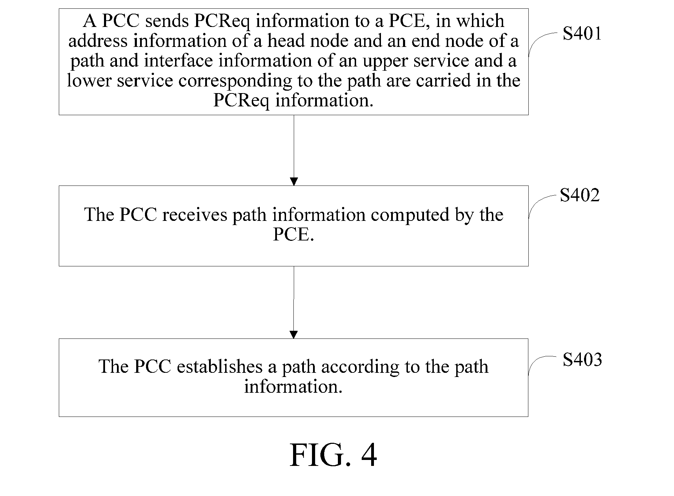

In a fourth embodiment, a path establishment method is established. Referring to FIG. 4, the process specifically includes the following steps.

In Step S401, a PCC sends PCReq information to a PCE, in which address information of a head node and an end node of a path and information of add/drop interfaces of a service corresponding to the path are carried in the PCReq information.

In Step S402, the PCC receives path information computed by the PCE.

The path information is computed by the PCE according to the address information of the head node and the end node of the path, the information of the add/drop interfaces of the service, the acquired label information of the add/drop interfaces of the service corresponding to the path, and the acquired cross-connection capability limit information of the head node and the end node of the path.

In Step S403, the PCC establishes a path according to the path information.

The label information of the add/drop interfaces of the service in Step S402 may be carried in the PCReq information in Step S401.

A specific executing procedure of this embodiment is based on the same concept with the foregoing embodiments, so please refer to the description in the first, the second, and the third embodiments of the present invention, and the specific executing procedure of this embodiment is not described here.

By adopting this embodiment, a success ratio of establishing the path is effectively improved.

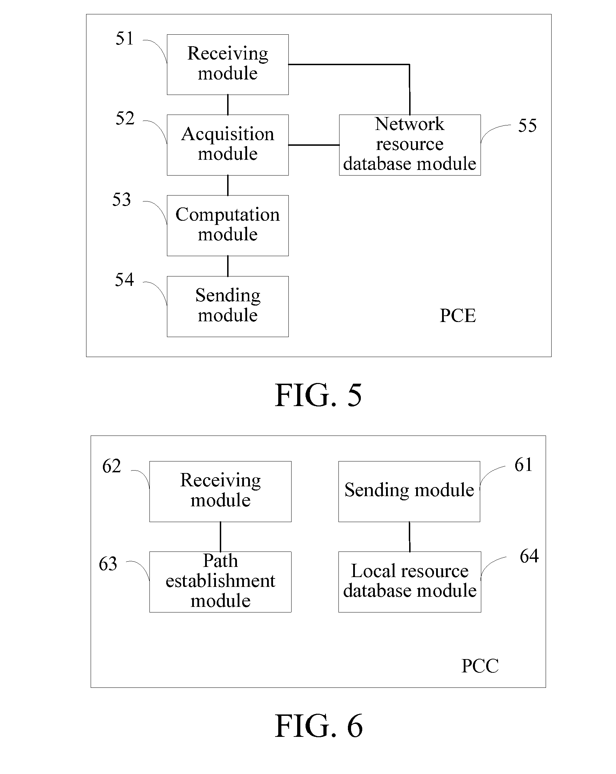

In a fifth embodiment, a PCE is provided. Referring to FIG. 5, the PCE includes a receiving module 51, an acquisition module 52, a computation module 53, and a sending module 54.

The receiving module 51 is configured to receive PCReq information from a PCC, in which address information of a head node and an end node of a path and information of add/drop interfaces of a service corresponding to the path are carried in the PCReq information.

The acquisition module 52 is configured to acquire label information of the add/drop interfaces of the service corresponding to the path, and cross-connection capability limit information of the head node and the end node of the path.

The computation module 53 is configured to compute path information satisfying the cross-connection capability limit information of the head node and the end node of the path, according to the address information of the head node and the end node of the path, the information of the add/drop interfaces of the service, the label information of the add/drop interfaces of the service, and the cross-connection capability limit information of the head node and the end node of the path.

The sending module 54 is configured to send the computed path information to the PCC.

The receiving module 51 is further configured to receive the cross-connection capability limit information of nodes in a network and/or interface label information of the nodes in the network.

According to an implementation of this embodiment, the PCE further includes a network resource database module 55. The network resource database module 55 is connected to the receiving module 51 and the acquisition module 52, and the network resource database module 55 is configured to store the cross-connection capability limit information of the nodes in the network and/or the interface label information of the nodes in the network received by the receiving module, for being acquired by the acquisition module.

In a sixth embodiment, a PCC is provided. Referring to FIG. 6, the PCC includes a sending module 61, a receiving module 62, and a path establishment module 63.

The sending module 61 is configured to send PCReq information to a PCE, in which address information of a head node and an end node of a path and information of add/drop interfaces of a service corresponding to the path are carried in the PCReq information.

The receiving module 62 is configured to receive path information computed by the PCE, in which the path information is computed by the PCE according to the address information of the head node and the end node of the path, the information of the add/drop interfaces of the service, the acquired label information of the add/drop interfaces of the service corresponding to the path, and the acquired cross-connection capability limit information of the head node and the end node of the path.

The path establishment module 63 is configured to establish a path according to the path information.

The PCC further includes a local resource database module 64. The local resource database module 64 is connected to the sending module 61, and the local resource database module 64 stores the cross-connection capability limit information of the node (PCC) and/or interface label information of the node (PCC). The sending module 61 is further configured to send the information to the rest nodes or the PCE.

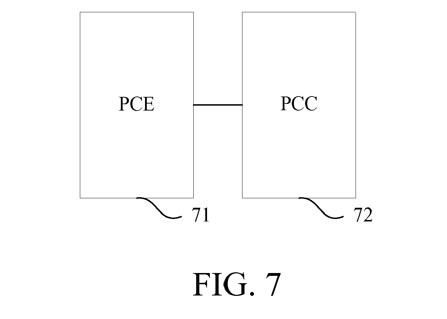

In a seventh embodiment, a path establishment system is provided. Referring to FIG. 7, the system includes a PCE and a PCC.

The PCE 71 is configured to receive PCReq information sent by a PCC 72, in which address information of a head node and an end node of a path and information of add/drop interfaces of a service corresponding to the path are carried in the PCReq information; acquire label information of the add/drop interfaces of the service corresponding to the path, and cross-connection capability limit information of the head node and the end node of the path; compute path information satisfying the cross-connection capability limit information of the head node and the end node of the path, according to the address information of the head node and the end node of the path, the information of the add/drop interfaces of the service, the label information of the add/drop interfaces of the service, and the cross-connection capability limit information of the head node and the end node of the path; and send the computed path information to the PCC 72.

The PCC 72 is configured to send the PCReq information to the PCE 71, and establish a path according to the path information returned by the PCE.

By adopting the technical solutions of the present invention, the PCE computes the path information satisfying the cross-connection capability limit information of the head node and the end node of the path, according to the address information of the head node and the end node of the path, the information of the add/drop interfaces of the service, the label information of the add/drop interfaces of the service, and the cross-connection capability limit information of the head node and the end node of the path, and the PCC establishes a path according to the path information returned by the PCE, thereby effectively improving a success ratio of computing and establishing the path.

Through the above description of the embodiments, it is apparent to persons skilled in the art that the present invention may be accomplished by software on a necessary universal hardware platform. The technical solution of the present invention or the part that makes contributions to the prior art can be substantially embodied in the form of a software product. The computer software product is stored in a storage medium, and contain several instructions to instruct a computer equipment (for example, a personal computer, a server, or a network equipment) to perform the method as described in the embodiments of the present invention.

It should be noted that the above descriptions are merely preferred embodiments of the present invention, and those skilled in the art may make various improvements and refinements without departing from the principle of the present invention. All such modifications and refinements are deemed to fall within the scope of the present invention.

## Claims

1. A path computation method, comprising:
receiving Path Computation Request (PCReq) information from a Path Computation Client (PCC), wherein address information of a head node and an end node of a path and information of add/drop interfaces of a service corresponding to the path are carried in the PCReq information;
acquiring label information of the add/drop interfaces of the service corresponding to the path, and cross-connection capability limit information of the head node and the end node of the path;
computing path information satisfying the cross-connection capability limit information of the head node and the end node of the path, according to the address information of the head node and the end node of the path, the information of the add/drop interfaces of the service, the label information of the add/drop interfaces of the service, and the cross-connection capability limit information of the head node and the end node of the path; and
sending the computed path information to the PCC.

2. The method according to claim 1, wherein the label information of the add/drop interfaces of the service is carried in the PCReq information; the cross-connection capability limit information of the head node and the end node of the path is pre-stored information, and the cross-connection capability limit information of the head node and the end node of the path is acquired according to the address information of the head node and the end node of the path.

3. The method according to claim 1, wherein the label information of the add/drop interfaces of the service and the cross-connection capability limit information of the head node and the end node of the path are pre-stored information, the label information of the add/drop interfaces of the service is acquired according to the information of the add/drop interfaces of the service acquire, and the cross-connection capability limit information of the head node and the end node of the path is acquired according to the address information of the head node and the end node of the path.

4. The method according to claim 2 or 3, wherein the PCC requests to compute a wavelength path.

5. The method according to claim 2, wherein the PCC requests to compute an electrical layer path.

6. The method according to claim 1, wherein the computing the path information comprises:
computing the path according to the address information of the head node and the end node of the path;
excluding an unreachable path according to the information of the add/drop interfaces of the service, the label information of the add/drop interfaces of the service, and the cross-connection capability limit information of the head node and the end node of the path, and computing the path information satisfying the cross-connection capability limit information of the head node and the end node of the path.

7. A path establishment method, comprising:
sending Path Computation Request (PCReq) information to a Path Computation Element (PCE), wherein address information of a head node and an end node of a path and information of add/drop interfaces of a service corresponding to the path are carried in the PCReq information;
receiving path information computed by the PCE, wherein the path information is computed by the PCE according to the address information of the head node and the end node of the path, the information of the add/drop interfaces of the service, acquired label information of the add/drop interfaces of the service corresponding to the path, and acquired cross-connection capability limit information of the head node and the end node of the path; and
establishing a path according to the path information.

8. A Path Computation Element (PCE), comprising:
a receiving module, configured to receive Path Computation Request (PCReq) information from a Path Computation Client (PCC), wherein address information of a head node and an end node of a path and information of add/drop interfaces of a service corresponding to the path are carried in the PCReq information;
an acquisition module, configured to acquire label information of the add/drop interfaces of the service corresponding to the path, and cross-connection capability limit information of the head node and the end node of the path;
a computation module, configured to compute path information satisfying the cross-connection capability limit information of the head node and the end node of the path, according to the address information of the head node and the end node of the path, the information of the add/drop interfaces of the service, the label information of the add/drop interfaces of the service, and the cross-connection capability limit information of the head node and the end node of the path; and
a sending module, configured to send the computed path information to the PCC.

9. The PCE according to claim 8, wherein
the receiving module is further configured to receive cross-connection capability limit information of nodes in a network and/or interface label information of the nodes in the network; and
the PCE further comprises a network resource database module, the network resource database module is connected to the receiving module and the acquisition module, and the network resource database module is configured to store the cross-connection capability limit information of the nodes in the network and/or the interface label information of the nodes in the network received by the receiving module, for being acquired by the acquisition module.

10. A Path Computation Client (PCC), comprising:
a sending module, configured to send Path Computation Request (PCReq) information to a Path Computation Element (PCE), wherein address information of a head node and an end node of a path and information of add/drop interfaces of a service corresponding to the path are carried in the PCReq information;
a receiving module, configured to receive path information computed by the PCE, wherein the path information is computed by the PCE according to the address information of the head node and the end node of the path, the information of the add/drop interfaces of the service, acquired label information of the add/drop interfaces of the service corresponding to the path, and acquired cross-connection capability limit information of the head node and the end node of the path; and
a path establishment module, configured to establish a path according to the path information.

11. The PCC according to claim 10, wherein
the PCC further comprises a local resource database module, the local resource database module is connected to the sending module, and the local resource database module stores the cross-connection capability limit information of the PCC and/or interface label information of the PCC; and
the sending module is further configured to send the information stored by the local resource database module to the PCE.

12. A path establishment system, comprising:
a Path Computation Element (PCE), configured to receive Path Computation Request (PCReq) information from a Path Computation Client (PCC), wherein address information of a head node and an end node of a path and information of add/drop interfaces of a service corresponding to the path are carried in the PCReq information; acquire label information of the add/drop interfaces of the service corresponding to the path, and cross-connection capability limit information of the head node and the end node of the path; compute path information satisfying the cross-connection capability limit information of the head node and the end node of the path, according to the address information of the head node and the end node of the path, the information of the add/drop interfaces of the service, the label information of the add/drop interfaces of the service, and the cross-connection capability limit information of the head node and the end node of the path; and send the computed path information to the PCC; and
a PCC, configured to send the PCReq information to the PCE, and establish a path according to the path information returned by the PCE.
